# DEMANDE DE BREVET EUROPEEN

(11) **EP 0 544 570 A1**
(43) Date de publication de la demande: **02.06.1993**
(21) Numéro de dépôt: 92403133.9
(22) Date de dépôt: 20.11.1992
(51) Int. Cl.: C01B 21/064, C04B 35/58

(54) **Procédé nouveau de préparation de nitrure de bore et nitrure de bore ainsi obtenu**

(30) Priorité: 28.11.1991 FR 9114734
(71) Demandeur: ELF ATOCHEM S.A., F-92800 Puteaux (FR)
(72) Inventeur: Majoral, Jean-Pierre, I-31077 Toulouse (FR); Brodie, Nancy, F-31400 Toulouse (FR); Van Der Does, Tom, NL-3648 AP Wilnis (NL)
(74) Mandataire: Hirsch, Marc-Roger

(57) **Abrégé**

L'invention a pour objet un procédé de préparation de nitrure de bore par réaction d'une borazine de formule: 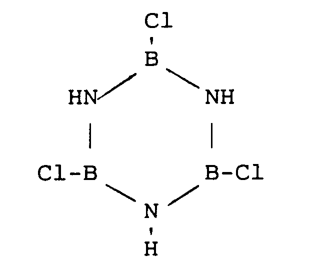
avec un dérivé de formule:

N₂Siₙ(CH₃)₃ₙH₄₋ₙ

dans laquelle n = 2 ou 3,
en vue d'obtenir un solide blanc vitreux qui, par pyrolyse, conduit à la formation de nitrure de bore (BN), et se rapporte également au nitrure de bore ainsi obtenu.

## Description

La présente invention a pour objet un procédé nouveau de préparation de nitrure de bore. Elle se rapporte également au nitrure de bore préparé à l'aide de ce procédé.

Le nitrure de bore est un matériau présentant une résistance aux chocs à température élevée, une conductibilité thermique anisotropique, une résistivité électrique, des propriétés lubrifiantes à température élevée et des propriétés mécaniques qui le font rechercher dans les applications céramiques. Les nombreux usages de ce matériau sont entre autres décrits dans les ouvrages Handbuch der Anorganische Chemie, Boron Compounds (Meller, Springer-Verlag Berlin, édition 1983, 2nd supplem. Vol. 1, page 20, et édition 1988, 3ème supplem. Vol. 3, page 1), et l'on citera, sans que ceci ne puisse constituer une quelconque limitation, des usages auxquels ce produit peut être employé, à savoir pour des moules dans l'industrie métallurgique, des tuyères de moulage, des agents de démoulage, des charges pour polymères et résines, des isolants pour transformateurs électrodes, revêtements résistants à l'oxydation, masques lithographiques pour rayons X, applications aérospatiales, etc.

Ces nombreux usages sont en fait fonction des propriétés physiques essentiellement différentes que peut présenter le nitrure de bore en fonction de ses différentes caractéristiques telles que pureté, dimensions des grains, forme des grains, cristallinité, conditions du frittage entre autres.

Ces caractéristiques diffèrent bien entendu selon le procédé de préparation employé qui peut être basé soit sur la synthèse métallurgique, à température élevée de l'ordre de 1 000°C, à partir d'acide borique et d'urée, soit sur la croissance par chimico-déposition de vapeur (CVD). Bien entendu, si pour un même procédé, les conditions varient quelque peu, sont alors également obtenues des caractéristiques différentes; ainsi, on se heurte à de nombreux problèmes pour parvenir à une bonne reproductibilité des caractéristiques du nitrure de bore qui rende possible son emploi pour un usage défini.

L'état de la technique présentement connu de la demanderesse est formé des documents suivants qui concernent la préparation de précurseurs polymères qui, après pyrolyse, conduisent à l'obtention de nitrure de bore:
- EP 368 688 concerne la réaction: 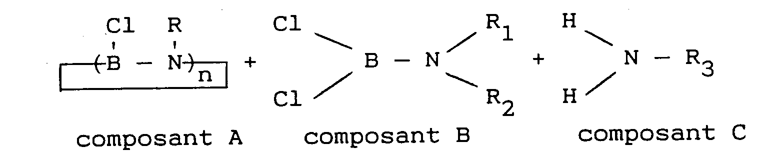 avec
   . le composant A lorsque n = 3, consistant en borazine,
   . R, R₁, R₂ et R₃ étant des atomes d'hydrogène, des radicaux hydrocarbonés, éventuellement substitués et des radicaux organosilylés et hydrogéno-organosilylés;
- EP 310 462 concerne la réaction: 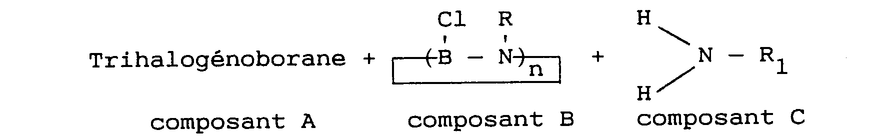 dans lequel R et R₁ sont tels qu'indiqués dans le point 1 ci-dessus et le composant B peut être la borazine;
- EP 278 734 concerne la réaction: 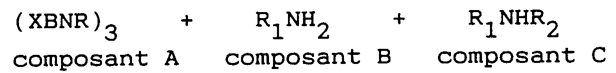 le composant A étant un dérivé cyclique, avec R étant un atome d'hydrogène ou un radical alkyle ou aryle; X étant un groupe amino ou silylamino et R₁ et R₂ représentant un radical alkyle, aryle ou silyle.
- EP 307 259 concerne la réaction: 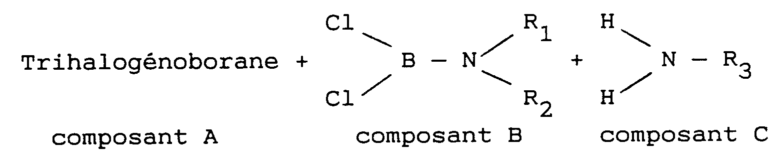 avec R₁, R₂ étant tels que cités dans les poinst 1 et 2 ci-dessus; et R₃ est un atome d'hydrogène, un radical alkyle, etc. et les radicaux organosilylés et hydrogéno-organosilylés;
- US-P-4 581 468 concerne la réaction:

   Trichloro-N-tris-(trialkylsilyl)borazine + NH₃
- Chemical Reviews 1990, 90, 73-91 donne différents procédés dont page 86: 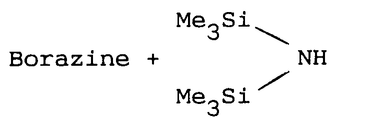 Aucun de ces procédés n'est semblable au procédé selon la présente invention.

La présente invention a pour objet un procédé nouveau qui permet d'obvier aux inconvénients des procédés connus dans la mesure où il consiste en un procédé d'obtention basé sur la réaction avec des formes stériques différentes d'un même produit et qui, selon la forme employée, conduit à des propriétés précisément définies et parfaitement reproductibles.

En fait, la présente invention a pour objet un procédé de préparation de nitrure de bore sur la réaction d'une borazine de formule: 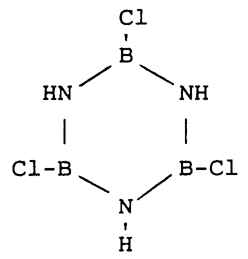
avec un dérivé de formule:

N₂Siₙ(CH₃)₃ₙH₄₋ₙ

dans laquelle n = 2 ou 3,
en vue d'obtenir un solide blanc vitreux qui, par pyrolyse, conduit à la formation de nitrure de bore (BN).

Avantageusement, la pyrolyse est mise en oeuvre sous atmosphère d'ammoniac ou d'argon, de préférence à une température d'environ 1 000°C.

Suivant une première forme d'exécution de l'invention, le dérivé de formule N₂Siₙ(CH₃)₃ₙH₄₋ₙ employé consiste en 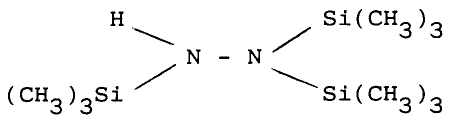
utilisé à raison de 2 équivalents pour 1 équivalent de borazine.
Selon cette première forme d'exécution de l'invention, le solide blanc vitreux obtenu est soluble dans le pentane et le toluène.

Suivant une deuxième forme d'exécution de l'invention, le dérivé de formule N₂Siₙ(CH₃)₃ₙH₄₋ₙ employé consiste en un mélange de 1,5 équivalents de: 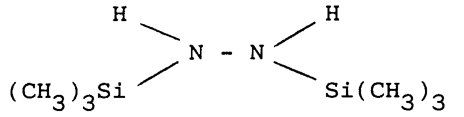
et de 1,5 équivalents de: 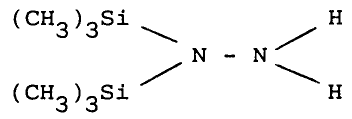
par équivalent de borazine.
Selon cette deuxième forme d'exécution de l'invention, la réaction est effectuée à température ambiante puis reflux à 120°C dans le toluène et donne lieu à un précipité consistant en un chlorhydrate qui, après séparation par filtration et évaporaration du toluène, conduit à l'obtention du solide blanc vitreux précité.

Suivant une troisième forme d'exécution de l'invention, le dérivé de formule N₂Siₙ(CH₃)₃ₙH₄₋ₙ employé consiste en: 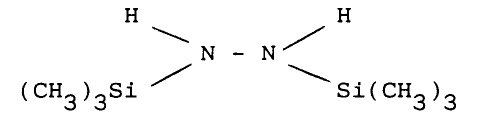
à raison de 2 équivalents par équivalent de borazine. Selon cette troisième forme d'exécution, la réaction est effectuée en présence de 2 équivalents de (CH₃CH₂)₃N par équivalent de borazine.
Selon cette troisième forme d'exécution, la réaction est suivie d'une traitement thermique sous vide.

La présente invention a aussi pour objet le nitrure de bore obtenu selon les procédés précités.

D'autres buts et avantages de la présente invention apparaîtront à la lecture de la description suivante et des exemples donnés à titre non limitatif.

### EXEMPLE 1

On ajoute 0,8 g de 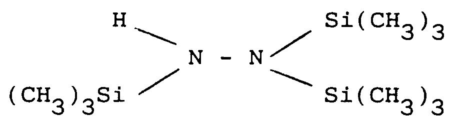
dissous dans 20 ml de toluène à 0,296 g de borazine 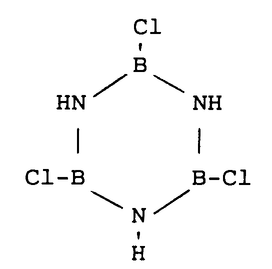
dissous dans 10 ml de toluène. Le mélange est maintenu au reflux durant 5 heures à 120°C. On ne constate pas de formation de précipité. On élimine le solvant par traitement sous vide et obtient 0,813 g d'un solide blanc volumineux. Ce solide est soluble dans le pentane.

Les données de RMN ¹H, ¹¹B, la spectroscopie infrarouge et la spectrométrie de masse permettent d'attribuer à ce solide blanc la structure suivante: 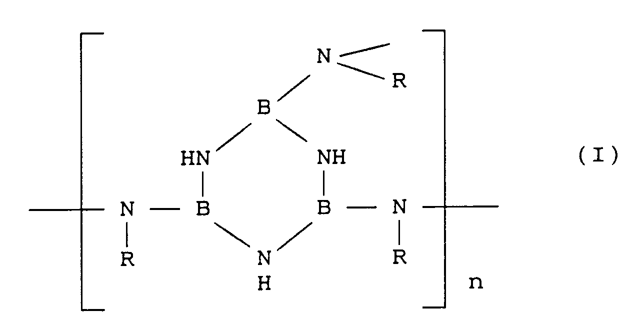
dans laquelle:
- R: est un proton ou un groupement triméthylsilyle.

On soumet ce solide à pyrolyse sous ammoniac ou sous argon à 1 000°C et on obtient du nitrure de bore avec un rendement de 30%.

### EXEMPLE 2

On fait réagir 0,31 g de borazine 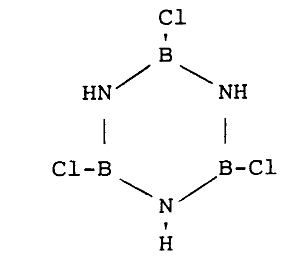
en solution dans 20 ml de toluène, avec 1,0 g d'un mélange équimolaire de: 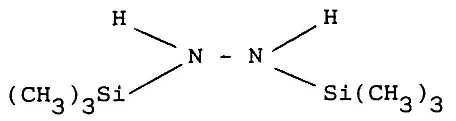
et

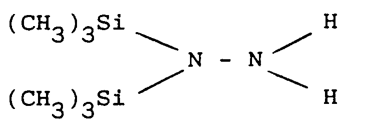

Le mélange est maintenu à température ambiante pendant 1 heure puis sous reflux à 120°C durant 4 heures. Le précipité formé pendant le reflux est filtré (élimination de 0,2 g de [(CH₃)₃Si]₂N₂H₂.HCl). Le fitlrat donne après élimination du solvant un solide blanc vitreux (0,34 g).

Les analyses, les données de RMN ¹H, ¹¹B et la spectroscopie infrarouge ainsi que la spectrométrie de masse permettent d'attribuer à ce produit la structure (I) dans laquelle R est un proton ou un groupement triméthylsilyle.

La pyrolyse de ce solide sous atmosphère d'ammoniac, à 1 000°C, conduit à du nitrure de bore avec un rendement de 25%.

### EXEMPLE 3

On fait réagir 0,78 g de borazine en solution dans 20 ml de toluène avec un mélange de 1,5 g de: 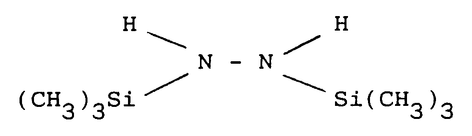
et de 0,86 g de triéthylamine, à température ambiante.

La solution résultante est agitée à cette température pendant 1 heure puis filtrée (élimination de 1,1 g de chlorhydrate de triéthylamine NEt₃.HCl). Le filtrat est soumis à un chauffage à reflux à 120°C durant 5 heures. Une filtration supplémentaire permet d'éliminer 0,16 g de chlorhydrate NEt₃.HCl. Le nouveau filtrat conduit après élimination du toluène à un solide blanc vitreux (1,1 g).

Les données de RMN ¹H, ¹¹B, la spectroscopie infrarouge et la spectrométrie de masse permettent d'attribuer à ce produit la structure (I) dans laquelle R est un proton ou un groupement triméthylsilyle.

La pyrolyse à 1 000°C de ce solide blanc vitreux, sous atmosphère d'ammoniac, conduit à du nitrure de bore avec un rendement de 25%.

### EXEMPLE 4

On opère dans les mêmes conditions que celles qui sont indiquées dans l'exemple 3. Le solide blanc vitreux obtenu est soumis à un prétraitement sous vide à 240°C durant 3 heures, puis pyrolysé à 1 000°C sous atmosphère d'ammoniac. On obtient du nitrure de bore avec un rendement de 32%.

## Revendications

**1.-** Procédé de préparation de nitrure de bore par réaction d'une borazine de formule: 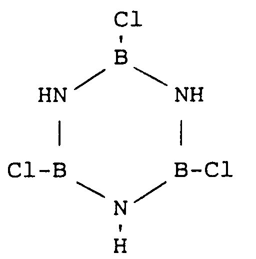 avec un dérivé de formule:
N₂Siₙ(CH₃)₃ₙH₄₋ₙ
dans laquelle n = 2 ou 3,
en vue d'obtenir un solide blanc vitreux qui, par pyrolyse, conduit à la formation de nitrure de bore.

**2.-** Procédé selon la revendication 1, caractérisé en ce que la pyrolyse est mise en oeuvre sous atmosphère d'ammoniac ou d'argon, de préférence à une température d'environ 1 000°C.

**3.-** Procédé selon la revendication 1 ou 2, caractérisé en ce que le dérivé de formule N₂Siₙ(CH₃)₃ₙH₄₋ₙ employé consiste en: 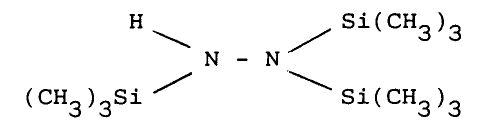 utilisé à raison de 2 équivalents pour 1 équivalent de borazine.

**4-.** Procédé selon la revendication 3, caractérisé en ce que le solide blanc vitreux obtenu est soluble dans le pentane et le toluène.

**5.-** Procédé selon la revendication 1 ou 2, caractérisé en ce que le dérivé de formule N₂Siₙ(CH₃)₃ₙH₄₋ₙ employé consiste en un mélange de 1,5 équivalents de: 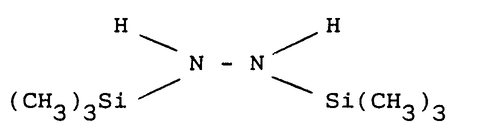 et de 1,5 équivalents de: 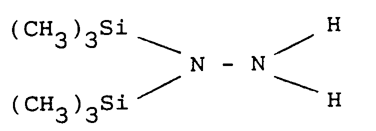 par équivalent de borazine.

**6.-** Procédé selon la revendication 5, caractérisé en ce que la réaction est effectuée à température ambiante puis reflux à 120°C dans le toluène et donne lieu à un précipité consistant en un chlorhydrate qui, après séparation par filtration et évaporation du toluène, conduit à l'obtention du solide blanc vitreux précité.

**7.-** Procédé selon la revendication 1 ou 2, caractérisé en ce que le dérivé de formule N₂Siₙ(CH₃)₃ₙH₄₋ₙ employé consiste en: 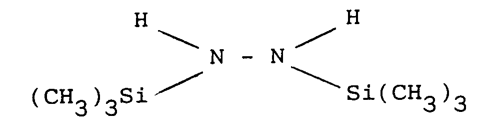 à raison de 2 équivalents par équivalent de borazine.

**8.-** Procédé selon la revendication 7, caractérisé en ce que la réaction est effectuée en présence de 2 équivalents de (CH₃CH₂)₃N par équivalent de borazine.

**9.-** Procédé selon la revendication 7 ou 8, caractérisé en ce que la réaction est suivie d'un traitement thermique sous vide.

**10.-** A titre de produits industriels nouveaux, le nitrure de bore obtenu à l'aide du procédé selon une quelconque des revendications 1 à 9.
